# EUROPÄISCHE PATENTSCHRIFT

(11) **EP 2 836 322 B1**
(45) Veröffentlichungstag und Bekanntmachung des Hinweises auf die Patenterteilung: **10.06.2020**
(21) Anmeldenummer: 13719266.2
(22) Anmeldetag: 28.03.2013
(51) Int. Cl.: B22F 3/24, B33Y 10/00, B33Y 50/02, B23K 101/00, B23K 103/10, B23K 103/14, B22F 3/105, B22F 5/04

(54) **VERFAHREN ZUR HERSTELLUNG VON NIEDERDRUCKTURBINENSCHAUFELN AUS TIAL**
METHOD FOR PRODUCING LOW-PRESSURE TURBINE BLADES FROM TIAL
PROCÉDÉ DE FABRICATION D'AUBES DE TURBINE BASSE PRESSION EN TIAL

(30) Priorität: 13.04.2012 DE 102012206125
(43) Veröffentlichungstag der Anmeldung: 18.02.2015
(73) Patentinhaber: MTU Aero Engines GmbH, 80995 München (DE)
(72) Erfinder: RICHTER, Karl-Hermann, 85229 Markt Indersdorf (DE); HANRIEDER, Herbert, 85411 Hohenkammer (DE)
(86) Internationale Anmeldenummer: PCT/DE2013/000171
(87) Internationale Veröffentlichungsnummer: WO 2013/152750

(56) Entgegenhaltungen:
- DE-A1- 19 631 584
- DE-A1-102004 041 633
- DE-A1-102009 051 479
- DE-A1-102010 026 084
- US-A1- 2002 015 654

## Beschreibung

### HINTERGRUND DER ERFINDUNG

### GEBIET DER ERFINDUNG

Die vorliegende Erfindung betrifft ein Verfahren zur Herstellung von Niederdruckturbinenschaufeln aus Titanaluminid-Werkstoffen.

### STAND DER TECHNIK

Für den Einsatz in einer Niederdruckturbine moderner Flugtriebwerke kommen Niederdruckturbinenschaufeln aus Titanaluminid (TiAl) - Werkstoffen in Frage, da diese ein geringes Gewicht aufweisen. Allerdings müssen die TiAI-Schaufeln für den Einsatz in Niederdruckturbinen bestimmte Festigkeitsanforderungen erfüllen, sodass die Auswahl an Herstellungsverfahren eingeschränkt ist. Beispielsweise lassen sich TiAl-Niederdruckturbinenschaufeln mit höheren Festigkeitsanforderungen nicht mehr durch einfaches Gießen herstellen, sondern müssen durch isothermes Schmieden erzeugt werden. Dies erfordert einen hohen Aufwand.

Aus dem Dokument DE 10 2010 026 084 A1 ist ein Verfahren und eine Vorrichtung zum Auftragen von Materialschichten auf einem Werkstück aus TiAl bekannt. Die US 2002/0015654 A1 beschreibt das selektive Lasersintern mit metallischen Materialien. Aus dem Dokument DE 10 2009 051 479 A1 ist ein Verfahren und eine Vorrichtung zur Herstellung eines Bauteils einer Strömungsmaschine durch selektives Laserschmelzen bekannt, während die DE 10 2004 041 633 A1 eine Vorrichtung zur Herstellung von Formkörpern beschreibt, bei welcher in parallel angeordneten Prozessräumen selektives Laserschmelzen eingesetzt werden kann. Die DE 196 31 584 A1 wiederum offenbart ein Verfahren zur Herstellung von Legierungspulver aus einer Legierungselektrode, die zerstäubt wird.

### OFFENBARUNG DER ERFINDUNG

### AUFGABE DER ERFINDUNG

Es ist deshalb Aufgabe der vorliegenden Erfindung ein alternatives Herstellungsverfahren bereitzustellen, welches effektiver und somit kostengünstiger durchgeführt werden kann. Gleichzeitig sollen jedoch die Eigenschaften der TiAl-Niederdruckturbinenschaufeln durch das Herstellungsverfahren nicht negativ beeinflusst werden.

### TECHNISCHE LÖSUNG

Diese Aufgabe wird gelöst durch ein Verfahren mit den Merkmalen des Anspruchs 1. Vorteilhafte Ausgestaltungen sind Gegenstand der abhängigen Ansprüche.

Die vorliegende Erfindung schlägt vor hochfeste TiAl-Schaufeln für Niederdruckturbinen durch ein generatives Verfahren, nämlich durch einen sogenannten SLM-Prozess (SLM Selective Laser Melting (Selektives Laserschmelzen)) herzustellen. Dies ist beispielsweise in der der DE 10 2010 026 139 A1 allgemein für Bauteile einer Turbomaschine, wie Leitschaufeln oder Laufschaufeln beschrieben.

Aufgrund der besonderen Eigenschaften von Titanaluminiden bzw. TiAI-Werkstoffen erfährt dieses Verfahren jedoch zusätzliche Weiterentwicklungen, um das gewünschte Ergebnis zu erzielen.

Zunächst wird zur Vermeidung von Rissen das teilweise hergestellte Bauteil durch induktives Erwärmen vorgewärmt, sodass die Temperatur oberhalb der Spröd-Duktil-Übergangstemperatur der TiAI-Werkstoffe liegt. Dies ist beispielsweise auch in der DE 10 2006 058 949 A1 für die Reparatur von Schaufelspitzen beschrieben.

Darüber hinaus wird das selektive Laserschmelzen in einer hochreinen Schutzgasatmosphäre durchgeführt. Die hochreine Schutzgasatmosphäre zielt insbesondere darauf ab den Anteil an Sauerstoff, Stickstoff und Wasserdampf niedrig zu halten. Gemäß der Erfindung ist die Konzentration dieser Verunreinigungen jeweils kleiner als 10 ppm, insbesondere kleiner oder gleich 5ppm sein.

Die Schutzgasatmosphäre kann mit einem Schutzgas erzeugt werden, welches unmittelbar vor dem Einleiten in einen Prozessraum, in dem das selektive Laserschmelzen durchgeführt wird, gereinigt wird. Alternativ kann auch entsprechend vorgereinigtes Schutzgas verwendet werden.

Als Schutzgas kann Helium verwendet werden. Der Arbeitsdruck des Schutzgases während des selektiven Laserschmelzens kann im Bereich von 50 mbar bis 1100 mbar, insbesondere 100 mbar bis 1000 mbar sein kann.

Als Werkstoff kommen unterschiedliche TiAI-Werkstoffe in Frage. Unter TiAI-Werkstoff wird bei der vorliegenden Offenbarung jeder Werkstoff verstanden, der in seinem Gefüge einen Bestandteil einer intermetallischen Phase, wie y - TiAl oder α₂ - Ti₃Al, aufweist. Auch Legierungen mit entsprechenden TiAl - Phasen fallen unter den Begriff der TiAI-Werkstoffe, wie beispielsweise Legierungen mit Niob, Bor, Mangan, also sogenannte TNB- oder TNM-Legierungen.

Für das selektive Laserschmelzen wird der TiAI-Werkstoff in Pulverform verwendet. Das Pulver kann eine Korngrößenverteilung aufweisen, z.B. eine Gauss-Verteilung. Die Korngröße des TiAI-Werkstoffpulvers kann so gewählt werden, dass ein Maximum der Korngrößenverteilung im Bereich von 20 µm bis 50 µm liegt.

Zur Erzielung einer hohen Festigkeit der TiAI-Werkstoffe kann ein hochreines TiAl-Ausgangspulver verwendet werden. Ein derartiges Pulver kann beispielsweise durch das EIGA-Verfahren (Electrode Induction Melting Gas Atomisation (Elektrodeninduktionsaufschmelzung und Gaspulverisierung)) hergestellt werden.

Gemäß der Erfindung werden mehrere Niederdruckturbinenschaufeln gleichzeitig in demselben Prozessraum hergestellt, wobei jedoch die Temperatureinstellung durch die induktive Vorwärmung für jede Turbinenschaufel individuell erfolgt, um zu gewährleisten, dass keine Unterschreitung der Spröd-Duktil-Übergangstemperatur des TiAI-Werkstoffs erfolgt.

Durch das selektive Laserschmelzen kann die TiAl-Niederdruckturbinenschaufel endkonturnah hergestellt werden, so dass im Wesentlichen keine Nachbearbeitung mehr notwendig ist. Lediglich eine Verdichtung durch heißisostatisches Pressen und/oder eine Oberflächenbahandlung durch Polieren können noch erforderlich sein.

### KURZBESCHREIBUNG DER FIGUREN

Die beigefügten Zeichnungen zeigen in rein schematischer Weise in
Fig. 1 eine Draufsicht auf einen Bearbeitungsraum für die Herstellung einer Niederdruckturbinenschaufel aus einem TiAI-Werkstoff ge- mäß der vorliegenden Erfindung; und in
Fig. 2 eine Querschnittsansicht durch eine Arbeitskammer des Bearbei- tungsraums aus Fig. 1 zur Durchführung des Verfahrens zur Her- stellung einer Niederdruckturbinenschaufel aus einem TiAl- Werkstoff gemäß der vorliegenden Erfindung.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels anhand der beigefügten Figuren deutlich. Allerdings ist die Erfindung nicht auf dieses Ausführungsbeispiel beschränkt.

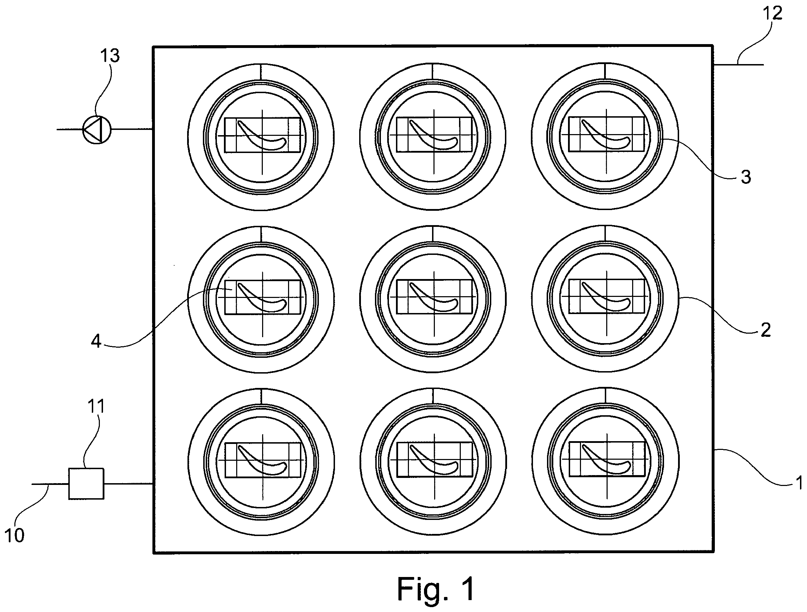

Die Fig. 1 zeigt einen Bearbeitungsraum 1 mit neun Arbeitskammern 2, in denen gleichzeitig Niederdruckturbinenschaufeln 4 aus einem TiAI-Werkstoff hergestellt werden können. Der Arbeitsraum ist gasdicht ausgebildet, um die Durchführung des Verfahrens in dem Arbeitsraum unter definierten Umgebungsbedingungen zu gewährleisten. Entsprechend können Evakuierungsmittel 13, wie beispielsweise Vakuumpumpen oder dergleichen vorgesehen sein, um den Arbeitsraum abpumpen und entleeren zu können. Zusätzlich ist eine Gaszuführung 10 vorgesehen, mittels der gewünschtes Prozessgas in den Arbeitsraum 1 eingeführt werden kann. Die Gaszuführung 10 weist in dem gezeigten Ausführungsbeispiel 11 eine Gasreinigungsanlage 11 auf, die das zugeführte Gas zusätzlich reinigen kann. Darüber hinaus ist es selbstverständlich möglich bereits entsprechend reines Gas direkt in den Arbeitsraum 1 einzuleiten.

Die Gasreinigungsanlage 11 weist insbesondere Mittel zum Entfernen von Sauerstoff, Stickstoff und Wasserdampf auf, sodass Prozessgas mit niedrigen Sauerstoff-, Stickstoff- und Wasserdampfanteilen in den Arbeitsraum 1 eingeleitet werden kann. Für das erfindungsgemäße Verfahren ist es vorteilhaft, wenn die Konzentration von Sauerstoff, Stickstoff und Wasserdampf jeweils kleiner als 5ppm ist.

Um die Bestückung des Arbeitsraums 1 bzw. die Entleerung des Arbeitsraums 1 zu beschleunigen und die Evakuierungs- und Reinigungsprozesse des Arbeitsraums 1 abzukürzen, kann eine Schleuseneinrichtung zum Be- und Entladen der Prozesskammer vorgesehen sein.

Zum Ableiten des Prozessgases aus dem Arbeitsraum 1 ist zusätzlich ein Gasauslass 12 vorgesehen.

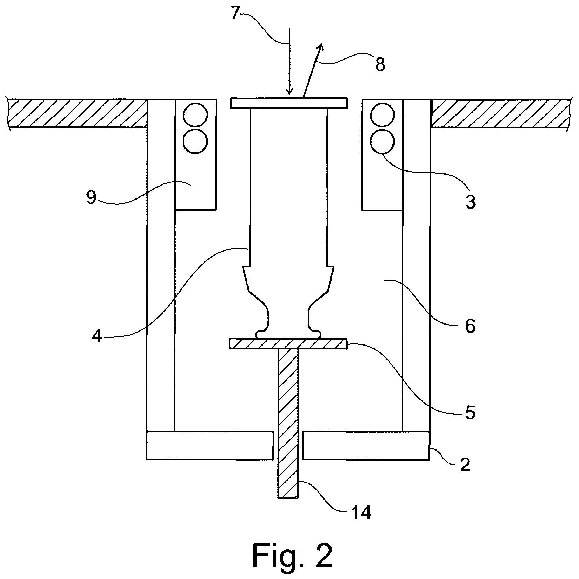

Die Fig. 2 zeigt einen Querschnitt durch eine Arbeitskammer 2, in der eine einzelne Niederdruckturbinenschaufel 4 hergestellt wird. Die Arbeitskammer 2 ist im Wesentlichen als ein Gefäß ausgebildet in welchem eine Plattform 5 über einen Stempel 14 verfahrbar angeordnet ist. In der Arbeitskammer 2 wird Pulver oberhalb der Plattform 5 bereitgestellt, die zunächst im oberen Bereich der Arbeitskammer 2 angeordnet ist, sodass dort ein Laserstrahl 7 das auf der Plattform 5 befindliche Pulver aufschmelzen kann, sodass nach dem Erstarren des aufgeschmolzenen Pulvers ein entsprechendes Bauteil entsteht. Durch schrittweises Absenken der Plattform 5 und Überfüllen mit Pulver 6 sowie Aufschmelzen des Pulvers schichtweise entsprechend der herzustellenden Kontur wird Schritt für Schritt die Niederdruckturbinenschaufel 4 hergestellt.

Zur Vermeidung von Rissen bei der Herstellung wird die teilweise hergestellte Niederdruckturbinenschaufel 4 im Bereich des Pulverauftrags induktiv vorgewärmt, sodass die Temperatur der bereits teilweise hergestellten Schaufel über dem Spröd-Ducktil-Übergang liegt. Hierzu wird eine Induktionsspule 3 verwendet, die in einer Isoliermasse 9, beispielsweise in Keramik eingebettet ist.

Zur Überwachung der Vorwärmtemperatur wird ein Pyrometer oder eine Wärmebildkamera eingesetzt, die die Wärmestrahlung 8 erfassen und entsprechend die Temperatur bestimmen.

Um eine exakte Temperaturführung für jede einzelne Niederdruckturbinenschaufel zu ermöglichen ist für jede Arbeitskammer 2 ein Pyrometer bzw. eine Wärmebildkamera vorgesehen, die die Temperatur ermittelt, wobei mittels der erfassten Temperatur als Steuer- oder Regelgröße die Steuerung bzw. Regelung der Induktionsspule 3 vorgenommen werden kann. Hierzu kann eine entsprechende Steuerung bzw. Regelung vorzugsweise basierend auf einer Datenverarbeitungsanlage mit entsprechender Softwarevorgesehen werden.

Das Pulver 6, das zur Herstellung der Niederdruckturbinenschaufel aus TiAl verwendet wird, ist ein hochreines TiAl-Pulver, welches eine Korngrößenverteilung mit einem Maximum bei 20 µm bis 50 µm Korngröße aufweist. Die Korngrößenverteilung ist üblicherweise entsprechend einer Gaussverteilung gegeben. Das hochreine TiAl-Pulver weist eine geringe Konzentration an Verunreinigungen auf, was insbesondere dadurch erreicht wird, dass es durch den sogenannten EIGA-Prozess (Electrode Induction Melting Gas Automation EIGA) hergestellt wird, bei welchem das Ausgangsmaterial berührungslos durch induktives Schmelzen in Pulverform überführt wird, sodass weder durch das Aufschmelzen noch durch das Erstarren Verunreinigungen in das Pulver eingebracht werden.

Der Bearbeitungsraum wird mit einer Heliumatmosphäre betrieben, welche mit einem Gasdruck im Bereich von 100 bis 1000 Millibar eingestellt wird. Durch die Verwendung der Gasreinigungsanlage 11 bzw. eines entsprechend vorgereinigten Gases mit einer niedrigen Konzentration an Verunreinigungen werden auch durch den generativen Herstellungsprozess der vorliegenden Erfindung keine Verunreinigungen in das Niederdruckturbinenschaufelmaterial eingebracht.

Nach der Herstellung durch selektives Laserschmelzen in dem Bearbeitungsraum 1 bzw. den Arbeitskammer 2 können die hergestellten Niederdruckturbinenschaufeln durch heißisostatisches Pressen verdichtet werden, um mögliche Poren, insbesondere Heliumporen in den erzeugten Bauteilen zu eliminieren. Ansonsten kann durch das selektive Laserschmelzen ein endkonturnahes Bauteil erzeugt werden, welches außer Polieren keine weitere Nachbehandlung erfordert. Das Polieren kann beispielsweise mit der MMP-Technologie (Micro Machining Process MMP) der Firma BestinClass durchgeführt werden.

Für den Betrieb der Induktionsspulen 3 können für die neun Bearbeitungskammern 2 des Bearbeitungsraums 1 jeweils einzelne Hochfrequenzgeneratoren vorgesehen sein oder mehrere Arbeitskammern, beispielsweise entlang einer Reihe oder einer Spalte, können durch einen Hochfrequenzgenerator betrieben werden. Darüber hinaus ist es auch denkbar, dass alle neun Induktionsspulen 3 der Arbeitskammern 2 von einem einzigen Hochfrequenzgenerator betrieben werden.

## Patentansprüche

1. Verfahren zur Herstellung von Niederdruckturbinenschaufeln aus einem TiAI-Werkstoff mit Hilfe eines selektiven Laserschmelzverfahrens, wobei während der Herstellung im selektiven Laserschmelzverfahren eine individuelle Vorwärmung für jede einzelne der bereits teilweise hergestellten Niederdruckturbinenschaufeln durch induktive Erwärmung erfolgt, und wobei das selektive Laserschmelzverfahren unter Schutzgas durchgeführt wird,
**dadurch gekennzeichnet, dass**
- mehrere Niederdruckturbinenschaufeln gleichzeitig in einem Prozessraum durch selektives Laserschmelzen hergestellt werden, wobei
- jede Niederdruckturbinenschaufeln während der Herstellung durch selektives Laserschmelzen einer Temperaturüberwachung unterzogen wird und
- deren Ergebnis insbesondere einer Steuerungs- und/oder Regelungseinheit zur Steuerung und/oder Regelung einer individuellen Induktionsspule für die induktive Erwärmung jeder einzelnen Niederdruckturbinenschaufel zur Verfügung gestellt wird und
- die Schutzgasatmosphäre Verunreinigungen an Sauerstoff, Stickstoff und Wasserdampf jeweils kleiner oder gleich 10 ppm aufweist.

2. Verfahren nach Anspruch 1,
**dadurch gekennzeichnet, dass**
das Schutzgas beim oder kurz vor dem Einführen in einen Prozessraum für das selektive Laserschmelzen gereinigt wird.

3. Verfahren nach Anspruch 1 oder 2,
**dadurch gekennzeichnet, dass**
als Schutzgas Helium verwendet wird.

4. Verfahren nach einem der vorhergehenden Ansprüche,
**dadurch gekennzeichnet, dass**
das Schutzgas mit einem Druck von 50 bis 1100 mbar, vorzugsweise 100 bis 1000 mbar in einem Prozessraum für das selektive Laserschmelzen bereitgestellt wird.

5. Verfahren nach einem der vorhergehenden Ansprüche,
**dadurch gekennzeichnet, dass**
der TiAI-Werkstoff für das selektive Laserschmelzen in Form eines Pulvers mit einem Maximum der Korngrößenverteilung bei 20 µm bis 50 µm eingesetzt wird.

6. Verfahren nach einem der vorhergehenden Ansprüche,
**dadurch gekennzeichnet, dass**
hochreines TiAl-Pulver für das selektive Laserschmelzen verwendet wird, welches insbesondere gemäß dem EIGA (Electrode Induction Melting Gas Atomisation (Elektrodeninduktionsaufschmelzung und Gaspulverisierung)) - Verfahren hergestellt wird.

7. Verfahren nach einem der vorhergehenden Ansprüche,
**dadurch gekennzeichnet, dass**
die Niederdruckturbinenschaufeln nach dem selektiven Laserschmelzen heißisostatisch gepresst werden und/oder einer Wärmebehandlung unterzogen werden.

8. Verfahren nach einem der vorhergehenden Ansprüche,
**dadurch gekennzeichnet, dass**
die Niederdruckturbinenschaufeln nach dem selektiven Laserschmelzen oder einer heißisostatischen Pressung mit Ausnahme einer Oberflächenbehandlung durch Polieren keiner weiteren Nachbearbeitung unterzogen werden.

9. Verfahren nach einem der vorhergehenden Ansprüche,
**dadurch gekennzeichnet, dass**
die Schutzgasatmosphäre Verunreinigungen an Sauerstoff, Stickstoff und Wasserdampf jeweils kleiner oder gleich kleiner oder gleich 5 ppm aufweist

## Claims

1. Method for producing low-pressure turbine blades from a TiAl material using a selective laser melting method, individual preheating for each of the low-pressure turbine blades that have already been partially produced taking place by induction heating during production in the selective laser melting method, and the selective laser melting method being carried out under protective gas, **characterized in that**
- a plurality of low-pressure turbine blades are produced simultaneously in a process space by means of selective laser melting,
- each low-pressure turbine blade being subjected to temperature monitoring during production by means of selective laser melting and
- the result of this being made available in particular to an open-loop and/or closed-loop control unit for the open-loop and/or closed-loop control of an individual induction coil for the inductive heating of each individual low-pressure turbine blade and
- the protective gas atmosphere has impurities of oxygen, nitrogen and water vapor of in each case less than or equal to 10 ppm.

2. Method according to claim 1, **characterized in that** the protective gas is cleaned during or shortly before being introduced into a process space for the selective laser melting.

3. Method according to either claim 1 or claim 2, **characterized in that** helium is used as the protective gas.

4. Method according to any of the preceding claims, **characterized in that** the protective gas is provided at a pressure of 50 to 1100 mbar, preferably 100 to 1000 mbar, in a process space for the selective laser melting.

5. Method according to any of the preceding claims, **characterized in that** the TiAl material for the selective laser melting is used in the form of a powder having a maximum grain size distribution of 20 µm to 50 µm.

6. Method according to any of the preceding claims, **characterized in that** high-purity TiAl powder which is produced in particular according to the EIGA (electrode induction melting gas atomization) method is used for the selective laser melting.

7. Method according to any of the preceding claims, **characterized in that** the low-pressure turbine blades are hot isostatically pressed after the selective laser melting and/or are subjected to a heat treatment.

8. Method according to any of the preceding claims, **characterized in that** the low-pressure turbine blades are not subjected to any further post-processing after the selective laser melting or hot isostatic pressing, with the exception of a surface treatment by polishing.

9. Method according to any of the preceding claims, **characterized in that** the protective gas atmosphere has impurities of oxygen, nitrogen and water vapor of in each case less than or equal to 5 ppm.

## Revendications

1. Procédé de fabrication d'aubes de turbine basse pression en matériau TiAI à l'aide d'un procédé de fusion laser sélective, dans lequel, pendant la fabrication selon le procédé de fusion laser sélective, un préchauffage individuel pour chacune des aubes de turbine basse pression déjà partiellement fabriquées est effectué par chauffage par induction, et dans lequel le procédé de fusion laser sélective est réalisé sous gaz protecteur, **caractérisé en ce que**
- plusieurs aubes de turbine basse pression sont fabriquées simultanément dans une chambre de traitement par fusion laser sélective, dans lequel
- chaque aube de turbine basse pression est soumise à un contrôle de température pendant sa fabrication par fusion laser sélective, et
- dont le résultat est fourni en particulier à une unité de commande et/ou de réglage destinée à commander et/ou à régler une bobine d'induction individuelle pour le chauffage par induction de chaque aube individuelle de turbine basse pression, et
- l'atmosphère de gaz protecteur contient des impuretés sous forme d'oxygène, d'azote et de vapeur d'eau dont la quantité est respectivement inférieure ou égale à 10 ppm.

2. Procédé selon la revendication 1,
**caractérisé en ce que**
le gaz protecteur est purifié pendant ou peu avant son introduction dans une chambre de traitement pour la fusion laser sélective.

3. Procédé selon la revendication 1 ou 2,
**caractérisé en ce que**
de l'hélium est utilisé comme gaz protecteur.

4. Procédé selon l'une des revendications précédentes,
**caractérisé en ce que**
le gaz protecteur est fourni à une pression de 50 à 1100 mbar, de préférence de 100 à 1000 mbar, dans une chambre de traitement pour la fusion laser sélective.

5. Procédé selon l'une des revendications précédentes,
**caractérisé en ce que**
le matériau TiAl est utilisé pour la fusion laser sélective sous la forme d'une poudre présentant une distribution granulométrique maximale de 20 à 50 µm.

6. Procédé selon l'une des revendications précédentes,
**caractérisé en ce**
**qu'**une poudre TiAl de haute pureté est utilisée pour la fusion laser sélective, laquelle est fabriquée en particulier selon le procédé EIGA (Electrode Induction Melting Gas Atomization).

7. Procédé selon l'une des revendications précédentes,
**caractérisé en ce que**
les aubes de turbine basse pression sont pressées isostatiquement à chaud et/ou soumises à un traitement thermique après la fusion laser sélective.

8. Procédé selon l'une des revendications précédentes,
**caractérisé en ce que**
les aubes de turbine basse pression ne sont soumises à aucun autre traitement de finition après la fusion laser sélective ou un pressage isostatique à chaud, à l'exception d'un traitement de surface par polissage.

9. Procédé selon l'une des revendications précédentes,
**caractérisé en ce que**
l'atmosphère de gaz protecteur contient des impuretés sous forme d'oxygène, d'azote et de vapeur d'eau dont la quantité est respectivement inférieure ou égale à 5 ppm.
